# EUROPÄISCHE PATENTSCHRIFT

(11) **EP 2 366 096 B1**
(45) Veröffentlichungstag und Bekanntmachung des Hinweises auf die Patenterteilung: **11.02.2015**
(21) Anmeldenummer: 09796961.2
(22) Anmeldetag: 15.12.2009
(51) Int. Cl.: G01D 11/30

(54) **BAUSATZ FÜR EINEN ELEKTROMOTOR MIT EINEM DREHWINKELGEBER**
ASSEMBLY SET FOR AN ELECTRIC MOTOR WITH AN ANGLE SENSOR
KIT POUR UN MOTEUR ÉLECTRIQUE AVEC UN CAPTEUR ANGULAIRE

(30) Priorität: 16.12.2008 DE 102008062561
(43) Veröffentlichungstag der Anmeldung: 21.09.2011
(73) Patentinhaber: Maxon Motor AG, 6072 Sachseln (CH)
(72) Erfinder: BUSSE-GRAWITZ, Max, Erick, CH-6055 Alpnach Dorf Obwalden (CH); SCHMIDT, Florian, CH-6020 Emmenbrücke (CH); PUSZTA, Berthold, CH-6006 Luzern (CH); KORNER, Reto, CH-6204 Sempach (CH); LUSSMANN, Mario, CH-6060 Sarnen (CH); UNTERNÄHRER, Bruno, CH-6048 Horas (CH)
(74) Vertreter: Grünecker, Kinkeldey, Stockmair & Schwanhäusser
(86) Internationale Anmeldenummer: PCT/EP2009/008993
(87) Internationale Veröffentlichungsnummer: WO 2010/072359

(56) Entgegenhaltungen:
- EP-A1- 0 280 390
- JP-A- 2002 357 457
- US-A1- 2007 146 171
- US-A1- 2008 111 061

## Beschreibung

Die vorliegende Erfindung betrifft einen Bausatz für einen Elektromotor mit einem Drehwinkelgeber zur Positionsbestimmung einer Motorwelle des Elektromotors.

Es ist bekannt, Elektromotoren mit Drehwinkelgebern auszustatten, um die Position der Motorwelle des Elektromotors zu bestimmen. Üblicherweise umfasst ein solcher Drehwinkelgeber einen Sensor und eine Maßverkörperung, welche auf der Motorwelle befestigt ist. Eine Drehung der Motorwelle, und damit der Maßverkörperung, wird von dem Sensor registriert und in Form von elektrischen Signalen ausgegeben. Dabei kommen verschiedenste Varianten von Drehwinkelgebern, beispielsweise kapazitive Drehwinkelgeber, induktive Drehwinkelgeber, magnetoresistive Drehwinkelgeber, optische Drehwinkelgeber, magnetische Drehwinkelgeber oder potentiometrische Drehwinkelgeber zum Einsatz. Die Drehwinkelgeber können direkt im Motor verbaut ausgeführt werden. Dabei muss für jeden Motordurchmesser und für jeden Drehwinkelgebertypus ein anderes Drehwinkelgebergehäuse und eine entsprechend angepasste Befestigung am Elektromotor konstruiert werden. Die richtige Position des Sensors ist in Abhängigkeit von der Technologie des Drehwinkelgebers sehr wichtig. Üblicherweise wird die richtige Sensorposition durch die Form des Drehwinkelgebergehäuses vorgegeben. Der Sensor muss daher in das Gehäuse des Drehwinkelgebers passen und wird im Wesentlichen durch seine Außenkontur referenziert. Aus diesem Grund sind sehr präzise und teure Außenkonturfräsungen nötig. Es ist auch bekannt, Drehwinkelgeber an dem Motor zu verstiften. Nachteilig dabei sind aber hohe Kosten bei Metallstiften bzw. nicht ausreichende Stabilität bei Kunststoffstiften.

Die EP 0 208 390 A1 zeigt bereits einen Elektrokleinmotor mit einem daran angebrachten Encodermodul. Das Encodermodul umfasst eine Codescheibe, die beidseitig teilweise von einem Emitter-/Detektormodul umgeben ist. Die Codescheibe und das Emitter-/Detektormodul sind in einem Encodergehäuse angeordnet, das sich aus einer Abdeckung und aus einer Bodenplatte zusammensetzt. Dabei kann die Abdeckung einfach auf die Bodenplatte aufgeklipst werden. Die Bodenplatte weist Bohrungen auf, so dass sie mittels Befestigungsschrauben an einer Stirnseite des Elektromotors befestigt werden kann.

Die JP 2002-357457 zeigt ebenfalls einen Elektrokleinmotor mit einem daran angebrachten Encoder. Die Codescheibe des Encoders ist auf die Motorwelle des Elektromotors aufgesteckt. Das Emitter-/Detektormodul des Encoders befindet sich auf einer Befestigungsplatte, die eine Aussparung aufweist. Die Befestigungsplatte wird seitlich zwischen Elektromotor und Codescheibe eingeschoben, so dass das Emitter-/Detektormodul die Codescheibe an zwei Seiten teilweise umgibt. Zudem ist eine Abdeckung vorgesehen, die nach Anbringung des Encoders an dem Elektromotor auf den Elektromotor aufgesteckt wird.

Die Anbringung dieser Encoder an den Elektromotoren ist relativ aufwändig.

Es ist daher die Aufgabe der vorliegenden Erfindung, einen Bausatz für einen Elektromotor mit einem Drehwinkelgeber bereitzustellen, mit dem eine einfache und genaue Positionierung des Sensor des Drehwinkelgebers am Elektromotor, ein guter Schutz des Sensors und ein einfacher Zusammenbau möglich ist.

Hierzu ist erfindungsgemäß vorgesehen, dass der Bausatz einen Elektromotor sowie einen Drehwinkelgeber mit einer Maßverkörperung und mit einem Sensor mit Sensorelektronik umfasst, wobei die Maßverkörperung des Drehwinkelgebers auf der an einer rückwärtigen Stirnseite des Elektromotors aus diesem austretenden Motorwelle anbringbar ist, der Sensor und die zugehörige Sensorelektronik des Drehwinkelgebers in eine Kunststoffscheibe eingebettet sind, an der rückwärtigen Stirnseite des Elektromotors ein motorseitiges Befestigungselement angeordnet ist und die Kunststoffscheibe ein sensorseitiges Befestigungselement aufweist, welches komplementär zu dem motorseitigen Befestigungselement ausgebildet ist.

Die Maßverkörperung des Drehwinkelgebers wird also an einer Stirnseite des Elektromotors auf der dort austretenden Motorwelle angebracht. Mittels dem an dieser Stirnseite angeordneten motorseitigen Befestigungselement und dem an der Kunststoffscheibe angeordneten sensorseitigen Befestigungselement wird die Kunststoffscheibe und damit der Sensor des Drehwinkelgebers an der Stelle, an der die Motorwelle aus dem Elektromotor austritt, am Elektromotor befestigt. Der Sensor ist damit benachbart zur Maßverkörperung angebracht. Durch das motorseitige Befestigungselement und das sensorseitige Befestigungselement der Kunststoffscheibe wird eine standardisierte Verbindung zwischen dem Elektromotor und dem Drehwinkelgeber unabhängig von Motortyp und Typ des Drehwinkelgebers realisiert. Durch die beiden Befestigungselemente ist also die Position des Sensors des Drehwinkelgebers vorgegeben, wodurch eine gute Positionsgenauigkeit zwischen der Maßverkörperung und dem Sensor sowohl in axialer als auch in radialer Richtung in Bezug auf die Längsachse der Motorwelle ermöglicht wird. Durch die Einbettung in die Kunststoffscheibe wird der empfindliche Sensor mit der zugehörigen Sensorelektronik beispielsweise vor Schlageinwirkungen geschützt.

In einer Ausführungsform kann vorgesehen werden, dass eines der beiden Befestigungselemente hülsenförmig ausgebildet ist und das andere Befestigungselement komplementär dazu ausgebildet ist, so dass die Befestigungselemente ineinander steckbar sind. Das hülsenförmige Befestigungselement bildet also eine Aufnahme für das zweite Befestigungselement aus, so dass eine sehr einfache Befestigung der beiden Befestigungselemente aneinander möglich ist. Die Befestigungselemente müssen lediglich ineinander gesteckt werden.

Vorzugsweise kann vorgesehen werden, dass das hülsenförmige Befestigungselement eine zylindrische Aufnahme für das andere Befestigungselement ausbildet, welches als zylindrische Welle ausgebildet ist. In der Regel ist das Gehäuse des Elektromotors zylindrisch, so dass hierdurch eine sehr einfache Ausgestaltung der Befestigungselemente ermöglicht wird.

In noch einer weiteren vorteilhaften Ausgestaltung kann vorgesehen werden, dass das motorseitige Befestigungselement als zylindrische Bohrung oder als zylindrische Welle am Motorgehäuse ausgebildet ist und die Kunststoffscheibe mit dem darin eingebetteten Sensor zylindrisch ist und zumindest teilweise als sensorseitiges Befestigungselement mit einer zylindrischen Welle oder mit einer zylindrischen Bohrung ausgebildet ist. Das sensorseitige Befestigungselement wird in diesem Fall also durch die Kunststoffscheibe selbst ausgebildet. Ist das motorseitige Befestigungselement als zylindrische Bohrung ausgebildet, so ist die Kunststoffscheibe als zylindrische Welle bzw. zylindrische Scheibe ausgebildet und kann einfach in die zylindrische Bohrung des Motorgehäuses eingesteckt werden. Vorzugsweise weist das Motorgehäuse hierzu einen kreisringförmigen Vorsprung auf, in den die Kunststoffscheibe eingesteckt werden kann. Ist das motorseitige Befestigungselement hingegen als zylindrische Welle ausgebildet, so weist die Kunststoffscheibe zumindest teilweise eine zylindrische Bohrung auf, und kann so auf das Motorgehäuse des Elektromotors aufgesteckt werden, dass sie das als zylindrische Welle ausgebildete motorseitige Befestigungselement umgibt. Auch in diesem Fall ist das Befestigungselement am Motor vorzugsweise als kreisringförmiger Vorsprung ausgebildet, an der Kunststoffscheibe ist ebenfalls ein kreisringförmiger Vorsprung vorgesehen, dessen Innendurchmesser dem Außendurchmesser des kreisringförmigen Vorsprungs am Motorgehäuse entspricht. Das motorseitige Befestigungselement am Motorgehäuse und die Kunststoffscheibe, die das sensorseitige Befestigungselement ausbildet, sind von ihren Abmaßen vorzugsweise so gewählt, dass die Befestigung für den Drehwinkelsensor maximal den Durchmesser des Elektromotorgehäuses aufweist.

Es kann aber auch vorgesehen werden, dass das sensorseitige Befestigungselement als eine an der Kunststoffscheibe angebrachte Hülse ausgebildet ist. In diesem Fall ist eine sehr einfache Fertigung der Kunststoffscheibe möglich, die dann in Form einer kreiszylindrischen Scheibe ausgebildet ist. Die separate Hülse wird an der Kunststoffscheibe angebracht und die Kunststoffscheibe mittels der Hülse auf dem Befestigungselement des Motorgehäuses angebracht. Auf diese Weise ist eine einfache Befestigung der Hülse auf dem Elektromotor möglich, es wird ein einfacher und schneller Zusammenbau des Bausatzes realisiert.

In einer weiteren Variante kann vorgesehen werden, dass der Sensor mit der zugehörigen Sensorelektronik von Kunststoff umspritzt ist, so dass die Kunststoffscheibe ausgebildet wird. Auf diese Weise ist eine sehr einfache Fertigung der Kunststoffscheibe mit dem eingebetteten Sensor möglich. Beim Spritzgießen ist eine gute Positionierung des Sensors in der Spritzgießform möglich, so dass die erforderliche Genauigkeit zur Positionierung des Sensors erreicht wird.

Es kann ferner vorgesehen werden, dass die Kunststoffscheibe mit einem Schutz gegen elektromagnetische Störfelder versehen ist. Der Sensor wird somit vor elektrischen und magnetischen Außeneinwirkungen geschützt, so dass keine Verfälschung der Messwerte eintritt.

Um eine einfache Herstellung zu ermöglichen, kann vorgesehen werden, dass der Schutz gegen elektromagnetische Störfelder durch eine auf der Kunststoffscheibe angebrachte, elektrisch hochleitfähige Lackschicht und/oder in die Kunststoffscheibe eingebrachte elektrisch leitfähige Füllstoffe und/oder an der Kunststoffscheibe angebrachte Einlegeteile mit abschirmender Wirkung ausgebildet ist.

Noch eine weitere Variante sieht vor, dass die Kunststoffscheibe mit dem darin eingebetteten Sensor und der Sensorelektronik in der Hülse verschiebbar ist, um einen optimalen Abstand zwischen der Maßverkörperung und dem Sensor einzustellen. Auf diese Weise ist ein einfacher Zusammenbau des Bausatzes mit guter Positionsgenauigkeit in axialer Richtung zwischen dem Sensor und der Maßverkörperung des Drehwinkelgebers möglich. Die Maßverkörperung wird auf die Motorwelle des Elektromotors aufgebracht, so dass sie ihre vorgesehene Position einnimmt. Die Hülse mit der darin eingesetzten Kunststoffscheibe wird auf den Motor aufgesteckt. Anschließend wird die Kunststoffscheibe nach innen geschoben, bis sie an der Maßverkörperung anliegt. Die Kunststoffscheibe wird nun wieder nach außen gezogen, bis der optimale axiale Abstand zwischen dem Sensor und der Maßverkörperung erreicht ist.

Um eine einfache Ausbildung und eine einfache Auswertung der Sensorsignale zu ermöglichen, kann vorgesehen sein, dass die Sensorelektronik mit einem Kabel verbunden ist und in der Kunststoffscheibe eine Zugentlastung für das Kabel vorgesehen ist.

Noch eine weitere bevorzugte Ausbildungsform sieht vor, dass der Sensor mit zugehöriger Sensorelektronik auf einer Leiterplatte angeordnet ist und die Leiterplatte elektrische Anschlüsse für den Elektromotor aufweist. Die elektrischen Anschlüsse dienen z.B. als Anschlüsse für die Motorwicklung eines Elektromotors. Im Falle eines Gleichstrom-Elektromotors können die Anschlüsse auch als Kontaktierung der Kommutierungsbürsten dienen. Dadurch wird die Stromversorgung des Motors über die Stromversorgung der Leiterplatte realisiert, es ist ein einfacher Stromanschluss des Elektromotors möglich.

Vorzugsweise kann hierbei vorgesehen werden, dass an der Leiterplatte oder an der Motorwicklung elektrische Kontaktelemente angeordnet sind, die die elektrischen Anschlüsse für den Elektromotor ausbilden. Dadurch wird die Stromversorgung des Elektromotors besonders einfach. Wird die Kunststoffscheibe mit der darin eingebetteten Leiterplatte mittels der Befestigungselemente an dem Elektromotor befestigt, so kommen die elektrischen Kontaktelemente, z.B. Stifte, mit der Stromversorgung der Leiterplatte und den Anschlüssen des Elektromotors in Kontakt. Die Stromversorgung des Elektromotors ist so sichergestellt.

Noch eine weitere Ausführungsform der Erfindung sieht vor, dass die Kunststoffscheibe im Bereich der rückwärtigen Stirnseite in das Gehäuse des Elektromotors eingesteckt ist, wobei das Gehäuse das motorseitige Befestigungselement und die Kunststoffscheibe das sensorseitige Befestigungselement ausbildet. Für diese Ausführungsform wird auch getrennt Schutz begehrt. Vorteilhaft an dieser Ausführungsform ist, dass die Kunststoffscheibe mit dem Sensor des Drehwinkelgebers im Gehäuse des Elektromotors integriert ist und dadurch gut geschützt wird. Zudem resultiert diese Ausführung in einer äußerst kompakten Bauweise.

Vorteilhaftweiser kann vorgesehen sein, dass die Kunststoffscheibe einen Lagersitz für die Motorwelle des Elektromotors ausbildet. Auch durch diese Maßnahme wird eine äußerst kompakte Bauweise des Elektromotors ermöglicht.

Zweckmäßigerweise kann dabei vorgesehen werden, dass die Kunststoffscheibe mit dem darin eingebetteten Sensor und der zugehörigen Sensorelektronik zwischen dem Rotor und der Maßverkörperung auf der Motorwelle angeordnet ist. Dadurch wird eine gute Lagerung der Motorwelle und ein sehr kompakter Aufbau des Elektromotors ermöglicht.

Ferner bezieht sich die Erfindung auch auf einen Elektromotor aus einem oben beschriebenen Bausatz, der einen Drehwinkelgeber mit einem in eine Kunststoffscheibe eingebetteten Sensor mit zugehöriger Sensorelektronik und mit einer Maßverkörperung umfasst, wobei die Kunststoffscheibe in ein Gehäuse des Elektromotors eingesteckt ist und einen Lagersitz für eine Motorwelle des Elektromotors ausbildet. Wie bereits beschrieben, wird durch diesen Aufbau des Elektromotors eine äußerst kompakte Bauweise erzielt.

Die Erfindung bezieht sich ferner auch auf ein Verfahren zur Herstellung einer Kunststoffscheibe mit einem darin eingebetteten, auf einer Leiterplatte angeordneten Sensor eines Drehwinkelgebers mit zugehöriger Sensorelektronik für einen Elektromotorbausatz mittels Spritzgießen.

Die Aufgabe besteht hierbei darin, ein Verfahren bereit zu stellen, das eine einfache Herstellung der Kunststoffscheibe ermöglicht.

Hierzu ist erfindungsgemäß vorgesehen, dass die Leiterplatte mit dem Sensor in eine Spritzgießform eingebracht wird und die Leiterplatte mit dem Sensor mit Kunststoff umspritzt wird, wobei die Leiterplatte mit dem daran angebrachten Sensor so in der Spritzgießform positioniert wird, dass die Position des Sensors in der Kunststoffscheibe in Bezug auf die Außenmaße der Kunststoffscheibe festgelegt wird.

Hierdurch wird eine sehr gute Positionsgenauigkeit des Sensors in Bezug auf die Außenmaße der Kunststoffscheibe erzielt. Die Sensoren sind also in jeder Kunststoffscheibe an einer genau festgelegten Position angeordnet, die in Bezug auf die Position ausgewählt wird, an der die Maßverkörperung des Drehwinkelgebers am Elektromotor befestigt ist. Die Kunststoffscheibe wird mittels ihres Außenumfangs an dem Elektromotor befestigt, so dass eine sehr genaue Ausrichtung der Maßverkörperung und des Sensors des Drehwinkelgebers erzielt wird.

In einer Variante des Verfahrens kann vorgesehen werden, dass in der Spritzgießform Stifte vorgesehen sind, die in Bohrungen in der Leiterplatte eingreifen und so die Position des Sensors in der Kunststoffscheibe festlegen. Auf diese Weise ist eine einfache Positionierung des Sensors in der Spritzgießform möglich.

Eine weitere sehr einfache Verfahrensvariante sieht vor, dass in der Spritzgießform eine Kavität vorgesehen ist, in die der Sensor eingelegt und somit positioniert wird.

Es kann aber auch vorgesehen werden, dass die Leiterplatten über einen Leadframe in der Spritzgießform fixiert und somit der Sensor positioniert wird. In diesem Fall kann der Leadframe auch die elektrischen Anschlüsse für die Wicklungen des Elektromotors ausbilden.

Alternativ könnte auch vorgesehen werden, dass die Leiterplatte mit dem Sensor auf ein vorgespritztes Element der Kunststoffscheibe aufgelegt und komplett umkapselt wird. Hierdurch wird ermöglicht, dass die Kunststoffscheibe komplett geschlossen ist und somit ein besonders guter Schutz des Sensors erreicht wird.

Im Folgenden werden Ausführungsformen der Erfindung anhand von Zeichnungen näher erläutert. Es zeigen:
- Fig. 1: Explosionszeichnung des Bausatzes,
- Fig. 2a - 2d: rückwärtige Stirnseite des Elektromotors mit daran angebrachter Kunststoffscheibe im Teilschnitt in verschiedenen Ausführungsformen,
- Fig. 3a - 3b: verschiedene Ausführungsformen der Motorkontakte,
- Fig. 4a - 4f: unterschiedliche Ausführungsformen der Kunststoffscheibe mit dem darin eingebetteten Sensor,
- Fig. 5a - 5b: Umspritzen des Sensors und der Sensorelektronik mit Kunststoff,
- Fig. 6a - 6c: Einbringen der Kunststoffscheibe in die Hülse und
- Fig. 7: weitere Ausführungsform eines Elektromotors.

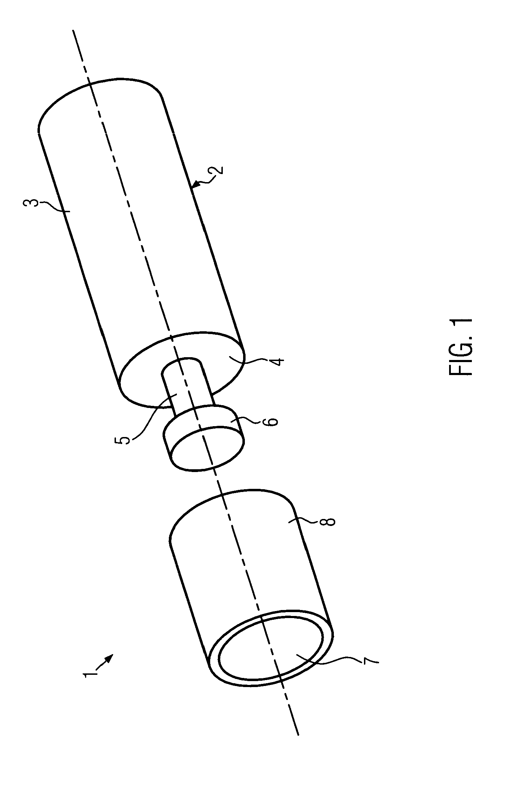

Fig. 1 zeigt eine Explosionszeichnung eines Bausatzes 1 für einen Elektromotor 2 mit einem Drehwinkelgeber zur Positionsbestimmung der Motorwelle 5 des Elektromotors 2. Der Bausatz 1 umfasst einen Elektromotor 2, der vorzugsweise ein zylindrisches Gehäuse 3 aufweist. An einer rückwärtigen Stirnseite 4 des Gehäuses 3 tritt die Motorwelle 5 des Elektromotors 2 aus dem Gehäuse 3 aus.

Der Bausatz 1 umfasst ferner eine Maßverkörperung 6 des Drehwinkelgebers. Im zusammengebauten Zustand des Bausatzes 1 ist die Maßverkörperung 6 an einer definierten Position auf der Motorwelle 5 des Elektromotors 2 befestigt.

Der Drehwinkelgeber des Bausatzes 1 umfasst ferner einen Sensor mit zugehöriger Sensorelektronik, die in eine Kunststoffscheibe 7 eingebettet sind. Die Kunststoffscheibe 7 weist an ihrem dem Elektromotor 2 zugewandten Ende ein sensorseitiges Befestigungselement 8 auf. Dieses sensorseitige Befestigungselement 8 kann an ein motorseitiges Befestigungselement (in Fig. 1 nicht dargestellt) angebracht, vorzugsweise aufgesteckt werden. Das sensorseitige Befestigungselement 8 und das motorseitige Befestigungselement bilden dann eine standardisierte Schnittstelle zwischen dem Elektromotor 2 und dem in der Kunststoffscheibe 7 angeordneten Sensor des Drehwinkelgebers aus. Die beiden Befestigungselemente sind so ausgebildet, dass beliebige Sensortypen an beliebige Motortypen anbringbar sind. Die Befestigungselemente können ineinander gesteckt und zusätzlich durch kleben, verstemmen, schweißen etc. miteinander verbunden werden.

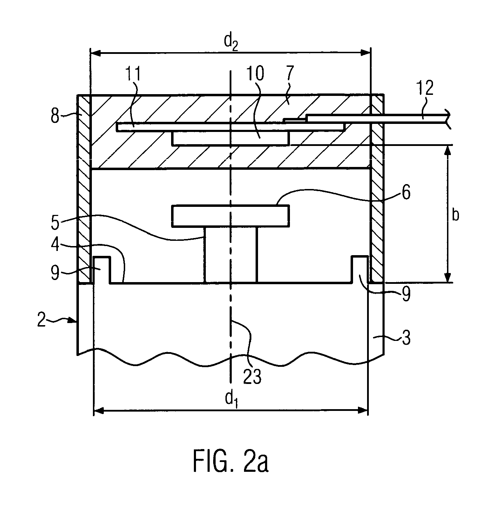

Fig. 2a zeigt einen Teilschnitt durch das rückwärtige Ende des Elektromotors 2 mit der daran angebrachten Kunststoffscheibe 7. Das Gehäuse 3 des Elektromotors 2 weist an der rückwärtigen Stirnseite 4, an der die Motorwelle 5 aus dem Gehäuse 3 austritt, ein motorseitiges Befestigungselement 9 auf. Das der Kunststoffscheibe 7 zugeordnete sensorseitige Befestigungselement 8 ist komplementär zu dem motorseitigen Befestigungselement 9 ausgebildet. Die beiden Befestigungselemente 8, 9 ergänzen sich also gegenseitig und bilden zusammen die Befestigung der Kunststoffscheibe 7 mit dem Sensor 10 des Drehwinkelgebers an dem Elektromotor 2 aus. Vorzugsweise ist entweder das sensorseitige Befestigungselement 8 oder das motorseitige Befestigungselement 9 hülsenförmig ausgebildet und das jeweils andere Befestigungselement 9; 8 komplementär dazu, also vorzugsweise in der Art eines Stiftes, der in die Hülse einsteckbar ist. Somit sind die Befestigungselemente 8, 9 ineinander steckbar, was eine einfache Befestigung ermöglicht. Dasjenige der beiden Befestigungselemente 8, 9, das hülsenförmig ausgebildet ist, weist vorzugsweise eine zylindrische Form auf, und bildet also eine zylindrische Aufnahme für das jeweils andere bzw. zweite Befestigungselement 9; 8. Das andere bzw. zweite Befestigungselement 9; 8 ist dann als zylindrische Welle ausgebildet und kann einfach in die Hülse eingesteckt werden. Wie bereits beschrieben, kann die Festigkeit dieser Verbindung durch Kleben, Verstemmen, Schweißen, etc. erhöht werden.

In der in der Fig. 2a gezeigten Ausführungsform ist das motorseitige Befestigungselement 9 als kreisringförmiger Vorsprung auf der Stirnseite des Elektromotors 2 ausgebildet. Der kreisringförmige Vorsprung umgibt die Motorwelle 5 mit der daran angebrachten Maßverkörperung 6. Das sensorseitige Befestigungselement 8 ist durch eine auf die Kunststoffscheibe 7 aufgesteckte hohlzylindrische Hülse 8 ausgebildet. Die Hülse 8 kann fest mit der Kunststoffscheibe 7 verbunden sein, es ist aber auch denkbar, dass die Kunststoffscheibe 7 in der Hülse 8 beweglich angeordnet ist. Der Außendurchmesser d₁ des als kreisringförmiger Vorsprung ausgebildeten motorseitigen Befestigungselements 9 und der Innendurchmesser d₂ des sensorseitigen Befestigungselements 8, also der Hülse, sind aneinander angepasst, so dass die Hülse 8 einfach auf den kreisringförmigen Vorsprung 9 aufgesteckt werden kann und dort gehalten wird. Die Hülse 8 und damit die Kunststoffscheibe 7 wird also in einer definierten Position an der rückwärtigen Stirnwand 4 des Elektromotors 2 gehalten.

In der Kunststoffscheibe 7 sind der Sensor 10 des Drehwinkelgebers sowie die auf einer Leiterplatte 11 angebrachte Sensorelektronik des Sensors 10 eingebettet. Die Sensor-elektronik ist mit einem Kabel 12 verbunden, das die Sensorsignale an eine Steuerung weiterleitet und die Stromversorgung sicherstellt. Das Sensorkabel 12 ist ebenfalls in die Kunststoffscheibe 7 eingebettet, wobei die Einbettung so erfolgt, dass eine Zugentlastung für das Kabel 12 vorgesehen ist. Als Sensorkabel 12 wird vorzugsweise ein Flachbandkabel eingesetzt. Denkbar ist auch die Verwendung eines Rundkabels bzw. einzelner Litzen. Die Leiterplatte 11, auf der der Sensor 10 und die Sensorelektronik angeordnet sind, ist so in der Kunststoffscheibe 7 eingebettet, dass sie eine definierte Position in Bezug auf die Außenmaße der Kunststoffscheibe 7 einnimmt. Somit ist die Position des Sensors 10 durch die Außenmaße der Kunststoffscheibe 7 festgelegt. Durch den Innendurchmesser d₂ des sensorseitigen Befestigungselements 8 und den Außendurchmesser d₁ des motorseitigen Befestigungselements 9 wird somit die Position des Sensors 10 in Bezug auf den Elektromotor 2 definiert. Diese Position ist so ausgewählt, dass der Sensor 10 und die auf der Motorwelle 5 des Elektromotors 2 angeordnete Maßverkörperung 6 in radialer Richtung in Bezug auf die Längsachse 23 des Elektromotors 2 optimal aufeinander ausgerichtet sind und der radiale Versatz zwischen dem Sensor 10 und der Maßverkörperung 6 gering gehalten wird. Dadurch ist eine hohe Genauigkeit des Drehwinkelgebers möglich. Auch der axiale Abstand in Bezug auf die Längsachse 23 zwischen dem Sensor 10 und der Maßverkörperung 6 wird über das sensorseitige Befestigungselement 8 und das motorseitige Befestigungselement 9 eingestellt. Die Form der beiden Befestigungselemente 8, 9 ist standardisiert, so dass beliebige Drehwinkelgeber an beliebige Elektromotoren anbringbar sind. Dadurch ist eine große Vielzahl von Kombinationsmöglichkeiten zwischen unterschiedlichen Motortypen und Drehwinkelgebertypen möglich.

Das motorseitige Befestigungselement 9 und das sensorseitige Befestigungselement 8 sind also so ausgebildet, dass sie nach dem Fügeprinzip Welle/Bohrung ineinander gesteckt und miteinander befestigt werden können. Die Festigkeit dieser Verbindung kann durch Kleben, Schweißen, Verstemmen, etc. erhöht werden. In dem in Fig. 2a gezeigten Ausführungsbeispiel bildet das sensorseitige Befestigungselement 8, also die auf die Kunststoffscheibe 7 aufgesteckte Hülse, die Bohrung aus, in die das motorseitige Befestigungselement 9, das als kreisringförmiger Vorsprung ausgebildet ist, als Welle eingesteckt werden kann.

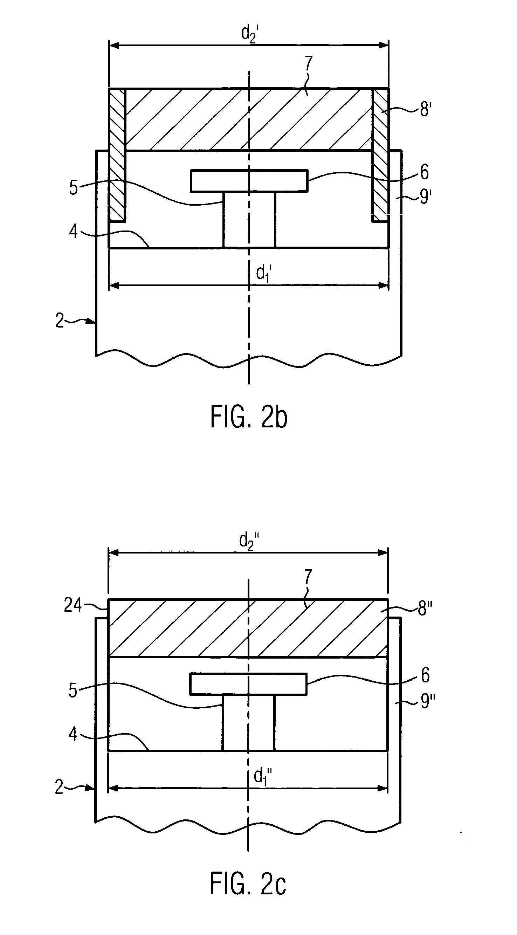

In Fig. 2b ist ein weiteres Ausführungsbeispiel der beiden Befestigungselemente gezeigt. Die Kunststoffscheibe 7 ist nur schematisch dargestellt, der Sensor und die Leiterplatte sind nicht gezeigt. Im Folgenden werden nur die Unterschiede erläutert. Das sensorseitige Befestigungselement 8' ist auch in diesem Ausführungsbeispiel als separate Hülse ausgebildet, in die die Kunststoffscheibe 7 eingebracht ist. Das motorseitige Befestigungselement 9' ist wiederum als kreisringförmiger Vorsprung an der rückwärtigen Stirnseite 4 des Elektromotors 2 ausgebildet. Der Außendurchmesser d₂' des sensorseitigen Befestigungselement 8', also der Hülse, ist etwas kleiner als der Innendurchmesser d₁' des motorseitigen Befestigungselements 9'. In diesem Fall wird also das sensorseitige Befestigungselement 8' in das motorseitige Befestigungselement 9' eingeführt, so dass das motorseitige Befestigungselement 9' die Bohrung ausbildet und das sensorseitige Befestigungselement 8' die in die Bohrung eingebrachte Welle.

Noch eine weitere Ausführungsform der Befestigungselemente ist in Fig. 2c gezeigt. Auch hier werden nur die Unterschiede zu den bereits beschriebenen Ausführungsformen aufgezeigt. In dem in Fig. 2c gezeigten Ausführungsbeispiel wird das sensorseitige Befestigungselement durch die Kunststoffscheibe 7 selbst ausgebildet. Die Kunststoffscheibe 7 ist zylindrisch, so dass die Mantelfläche 24 der zylindrischen Kunststoffscheibe 7 das sensorseitige Befestigungselement 8" ausbildet und als Welle in das motorseitige Befestigungselement 9" eingebracht wird. Das motorseitige Befestigungselement 9" ist wieder als kreisringförmiger Vorsprung an der Stirnseite 4 des Elektromotors 2 ausgebildet und formt eine Bohrung zur Aufnahme der durch die Kunststoffscheibe 7 ausgebildeten Welle. Der Innendurchmesser d₁" des motorseitigen Befestigungselements 9" ist etwas größer als der Außendurchmesser d₂" der zylindrischen Kunststoffscheibe 7, so dass die Kunststoffscheibe 7 leicht in das motorseitige Befestigungselement 9" eingeführt werden kann und dort gehalten wird.

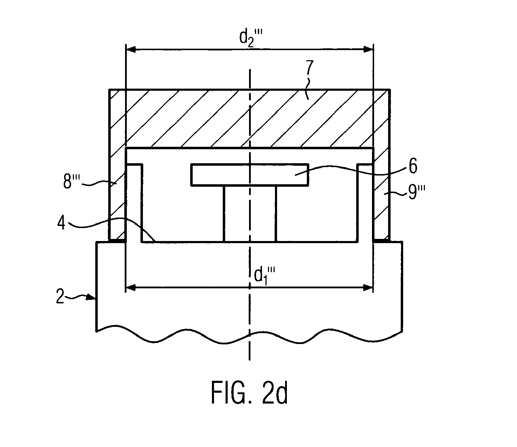

Fig. 2d zeigt noch ein weiteres Ausführungsbeispiel der Befestigungselemente. Auch hier werden wiederum nur die Unterschiede zu den bereits beschriebenen Ausführungsformen aufgezeigt. An der rückwärtigen Stirnseite 4 des Elektromotors 2 ist wiederum das motorseitige Befestigungselement 9'" ausgebildet, das die Form eines kreisringförmigen Vorsprungs hat. Auf der dem Elektromotor 2 zugewandten Seite der Kunststoffscheibe 7 ist ebenfalls ein kreisringförmiger Vorsprung 8'" ausgebildet, der das sensorseitige Befestigungselement ausbildet. Der Innendurchmesser d₂"' des kreisringförmigen Vorsprungs 8'" an der Kunststoffscheibe 7 ist etwas größer als der Außendurchmesser d₁'" des kreisringförmigen Vorsprungs 9'" an dem Elektromotor 2, so dass diese Vorsprünge ineinander geschoben werden und so die Kunststoffscheibe 7 an dem Elektromotor 2 gehalten wird. In diesem Ausführungsbeispiel bildet also das sensorseitige Befestigungselement 8'" die Bohrung aus, in die das motorseitige Befestigungselement 9"' als Welle eingeführt ist.

Wie aus den Figuren 2a bis 2d ersichtlich, ist die Kunststoffscheibe 7 mit dem sensorseitigen Befestigungselement 8, 8', 8", 8'" vorzugsweise so ausgebildet, dass ihr Außendurchmesser maximal dem Außendurchmesser des Elektromotors 2 entspricht.

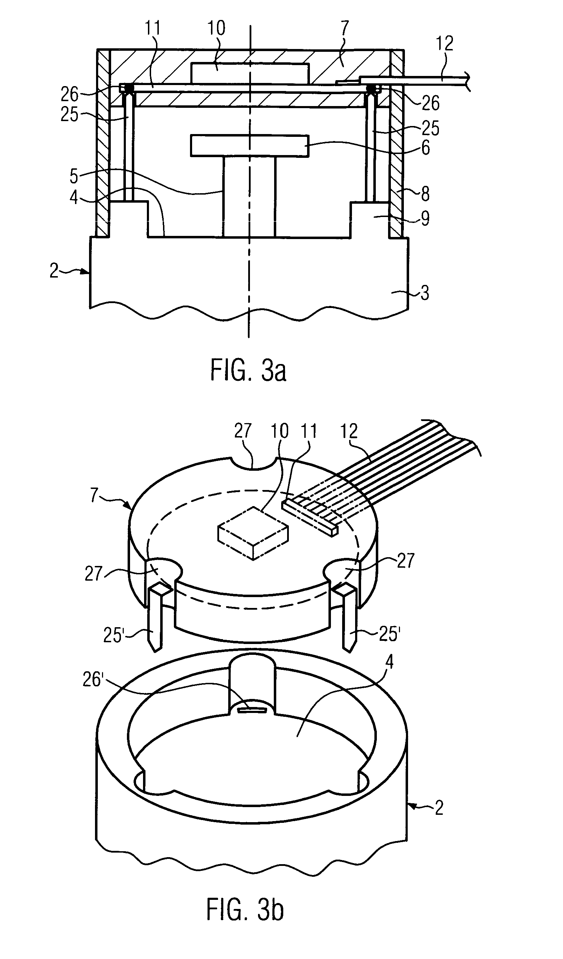

In Fig. 3a wird noch eine weitere Ausführungsform des Elektromotors 2 mit dem daran angebrachten Drehwinkelgeber gezeigt. Auf der rückseitigen Stirnseite 4 des Elektromotors 2 tritt die Motorwelle 5 aus dem Elektromotor 2 aus. Auf der Motorwelle 5 ist die Maßverkörperung 6 des Drehwinkelgebers angebracht. Das motorseitige Befestigungselement 9 ist als kreisringförmiger Vorsprung an der Stirnseite 4 des Elektromotors 2 ausgebildet. In diesem kreisringförmigen Vorsprung 9 sind elektrische Kontaktelemente, beispielsweise Stifte 25, angeordnet, die mit dem Elektromotor 2 verbunden sind und Motoranschlüsse ausbilden. Diese Motorenanschlüsse können Anschlüsse für die Motorwicklung des Elektromotors bilden. Im Falle eines Gleichstrommotors dienen die Motoranschlüsse als Kontaktierung der Kommutierungsbürsten. In der Kunststoffscheibe 7 sind an den Stiften 25 zugeordneten Stellen Aussparungen bzw. Bohrungen vorgesehen, so dass die Stifte 25 an die Leiterplatte 11 geführt werden können und dort an elektrischen Anschlusspunkten 26 mit elektrischen Anschlüssen der Leiterplatte 11 verbunden werden. Der Elektromotor kann damit über die elektrischen Anschlüsse 26 und die als Motorkontakte ausgebildeten Stifte 25 an eine Stromversorgung angeschlossen werden.

In der in Fig. 3a gezeigten Ausführungsform befindet sich der Sensor 10 des Drehwinkelgebers auf der Oberseite der Leiterplatte 11 und ist damit auf der vom Elektromotor 2 abgewandten Seite der Kunststoffscheibe 7 angeordnet. Diese Sensoranordnung ist auch bei allen anderen beschriebenen Ausführungsformen des Bausatzes für den Elektromotor möglich. Grundsätzlich ist jedoch auch eine beliebige andere Position des Sensors auf der Leiterplatte denkbar.

Eine weitere Ausbildung der elektrischen Kontaktelemente ist in Fig. 3b gezeigt. In dieser Ausführungsform sind die Stifte 25', die die Motorkontakte ausbilden und den Elektromotor 2 mit einer Stromversorgung, beispielsweise in Form des Kabels 12, verbinden an der Leiterplatte 11 des Sensors 10 angebracht. Die Kunststoffscheibe 7 weist dazu Aussparungen 27 in ihrem Randbereich auf, an welchen die Stifte 25', beispielsweise in Form von Leadframes, aus der Kunststoffscheibe 7 hinaus ragen, nach unten gebogen werden und auf geeigneten Gegenkontakten 26' angebracht werden. Beispielsweise können die Stifte 25' durch Stecken, Löten oder Ähnliches mit den Gegenkontakten 26' verbunden werden. In Fig. 3b sind das sensorseitige Befestigungselement und das motorseitige Befestigungselement so ausgebildet, dass an der Stirnseite 4 des Elektromotors 2 ein kreisringförmiger Vorsprung nach oben ragt und die Kunststoffscheibe 7 in diesen kreisringförmigen Vorsprung eingeführt und dort gehalten werden kann.

Es könnte auch vorgesehen werden, dass Bereiche der Leiterplatte seitlich, d.h. an der Mantelfläche, aus der Kunststoffscheibe hinaus ragen und Kontakte ausbilden. An diesen Kontakten können die Motorleitungen beispielsweise angelötet werden.

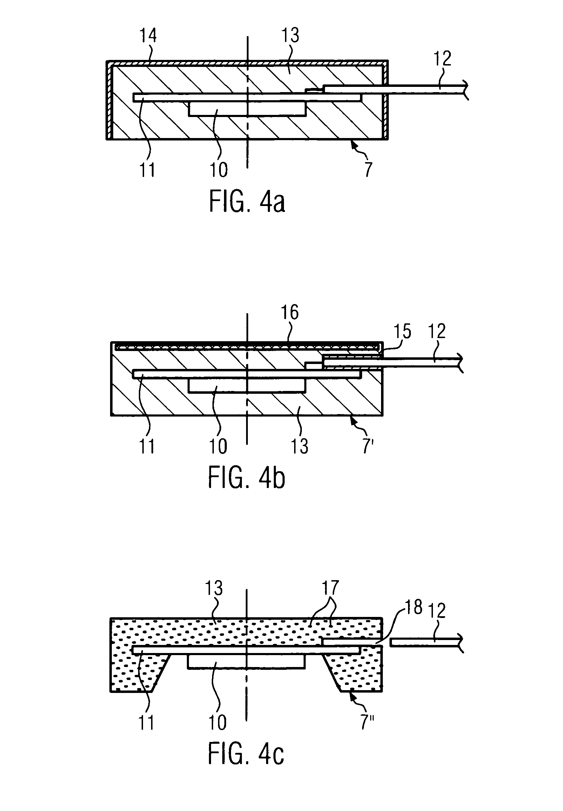

Fig. 4a zeigt eine Ausführungsform einer Kunststoffscheibe 7 im Schnitt. In die Kunststoffscheibe 7 sind die Leiterplatte 11 mit dem daran angebrachten Sensor 10 und der zugehörigen Sensorelektronik eines Drehwinkelgebers eingebettet. Die Leiterplatte 11 ist mit einem Kabel 12 zur Stromversorgung und zur Weiterleitung der Sensorsignale des Sensors 10 an eine Steuerung verbunden. Das Kabel 12 ist vorzugsweise als Flachbandkabel ausgebildet. Vorzugsweise wird die Leiterplatte 11 mit dem darauf angebrachten Sensor 10, der Sensorelektronik und dem Kabel 12 mit Kunststoff 13 umspritzt, so dass die Kunststoffscheibe 7 ausgebildet wird. Das Kabel 12 wird dabei direkt mit dem Kunststoff 13 der Kunststoffscheibe 7 umspritzt, so dass eine Zugentlastung ausgebildet wird. Als Kunststoff werden beispielsweise Duroplasten, Zweikomponentengießharze, teilpolymerisierte Einkomponentenharze, z.B. Macromelt™, oder auch Thermoplasten eingesetzt. Um einen Schutz des Sensors 10 und der zugehörigen Sensorelektronik gegen elektrische und magnetische Störfelder zu erhalten, wird die Kunststoffscheibe 7 zumindest teilweise mit einer Schicht aus elektrisch hochleitfähigem Lack 14 umgeben. Die Kunststoffscheibe 7 bildet also ein Gehäuse für den Sensor 10 und die zugehörige Sensorelektronik des Drehwinkelgebers aus. Durch dieses Gehäuse wird ein Schutz der Elektronik vor Umwelteinflüssen, also beispielsweise Feuchte, Wärme oder Schläge, erzielt. Die elektronischen Bauteile und der Sensor 10 sind dadurch gut geschützt.

Fig. 4b zeigt eine andere Ausführungsform einer Kunststoffscheibe 7'. Im Folgenden werden nur die Unterschiede dargestellt. In die Kunststoffscheibe 7' sind wiederum die Leiterplatte 11 mit dem darauf angebrachten Sensor 10 und der zugehörigen Sensorelektronik sowie das Kabel 12 eingebettet. Das Kabel 12 ist im Bereich des Austritts aus der Kunststoffscheibe 7' mit einer Umhüllung 15 umgeben, die aus einem Werkstoff gefertigt ist, der eine höhere Viskosität aufweist als der Kunststoff 13 der Kunststoffscheibe 7'. Die Umhüllung 15 bildet die Zugentlastung für das Kabel 12 aus. Dies ist vor allem dann notwendig, wenn die Kunststoffscheibe 7' aus einem Duroplast gefertigt wird. Der Schutz gegen elektromagnetische Störfelder wird durch mindestens ein Einlegeteil 16 mit abschirmender Wirkung ausgebildet.

Noch eine andere Ausführungsform einer Kunststoffscheibe 7" ist in Fig. 4c im Schritt dargestellt. Auch hier werden im Folgenden lediglich die Unterschiede zu den bereits beschriebenen Beispielen aufgeführt. In die Kunststoffscheibe 7" ist wieder die Leiterplatte 11 mit dem darauf angebrachten Sensor 10 und der Sensorelektronik des Drehwinkelgebers eingebettet. Auf der Leiterplatte 11 ist ein Stecker 18 für das Kabel 12 angebracht, mit dem die Signale des Sensors 10 an eine Steuerung übertragen werden und die Stromversorgung sichergestellt wird. Der Stecker 18 wird mit in die Kunststoffscheibe 7" eingespritzt. Es kann auch vorgesehen werden, dass nur die Steckerstifte eingespritzt werden. Die Zugentlastung für das Kabel 12 erfolgt über das Steckergehäuse des Steckers 18 bzw. über die Kabelisolation des Kabels 12. Im Bereich des Sensors 10 ist an der Unterseite der Kunststoffscheibe 7", also an der Seite, die der Maßverkörperung 6 zugeordnet ist, eine Aussparung vorgesehen, die mindestens die Größe des Sensors 10 aufweist. Der Schutz vor elektrischen und magnetischen Störfeldern wird durch in der Kunststoffmasse 13 der Kunststoffscheibe 7" enthaltende elektrisch leitfähige Füllstoffe 17 erzielt.

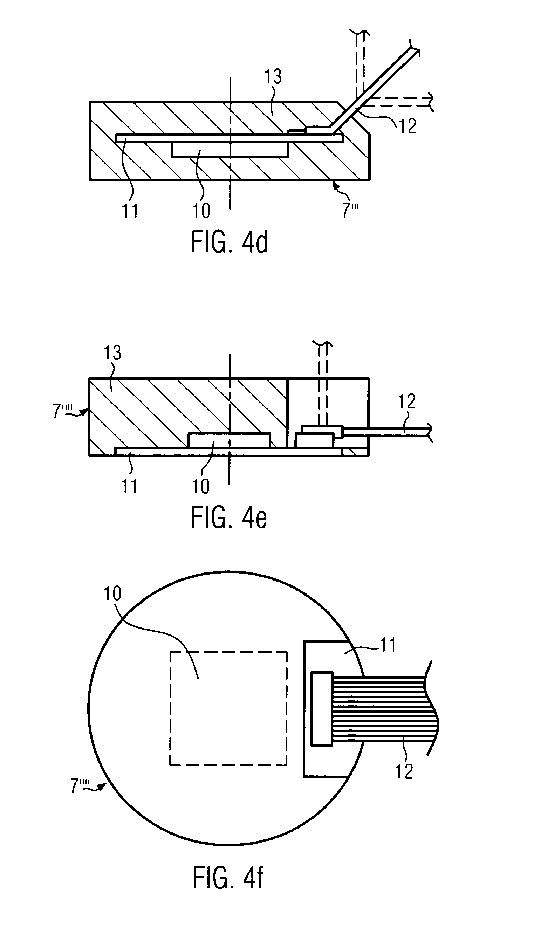

Noch eine weitere Ausführungsform der Kunststoffscheibe ist in Fig. 4d gezeigt. Die Kunststoffscheibe 7"' unterscheidet sich von dem bereits beschriebenen Kunststoffscheiben dadurch, dass das Anschlusskabel 12 in einem Winkel aus der zylindrischen Kunststoffscheibe 7'" nach oben hinaus ragt. Vorzugsweise beträgt der Austrittswinkel des Anschlusskabels 12 etwa 45°. Diese Ausführungsform ermöglicht einen axialen oder radialen Kabelabgang. Die verschiedenen Kabelabgänge sind in Fig. 4d mit durchgezogenen bzw. gestrichelten Linien gekennzeichnet.

Auch Fig. 4e zeigt eine weitere Ausführungsform der Kunststoffscheibe. Die Kunststoffscheibe 7"" ist so ausgebildet, dass die Leiterplatte 11 am Boden der Kunststoffscheibe 7"" angeordnet ist. Die Leiterplatte 11 ist also nur einseitig umspritzt. Der Sensor 10 ist deshalb auf der Oberseite der Leiterplatte 11 angeordnet. Zudem wird die elektrische Anschlussstelle auf der Leiterplatte 11 nicht umspritzt. In dem Bereich, in dem das Anschlusskabel 12 auf die Leiterplatte trifft, d.h. in dem Bereich in dem der Anschlussstecker auf der Leiterplatte 11 angeordnet ist, ist daher eine Aussparung vorgesehen. Dies ist in der Fig. 4f gezeigten Draufsicht auf die Kunststoffscheibe 7"" deutlich zu sehen.

Es sind auch diverse Kombinationen dieser Ausführungsformen möglich. Beispielsweise kann die Aussparung vor dem Sensor in allen Ausführungsformen vorgesehen sein. Alternativ könnte der Sensor auf der oberen Seite der Leiterplatte angeordnet sein. Es wäre auch möglich, dass eine Kunststoffscheibe mehrere Schutzvorrichtungen gegen elektromagnetische Störfelder, d.h. eine Lackschicht und/oder Einlegeteile und/oder elektrisch leitfähige Füllstoffe, aufweist.

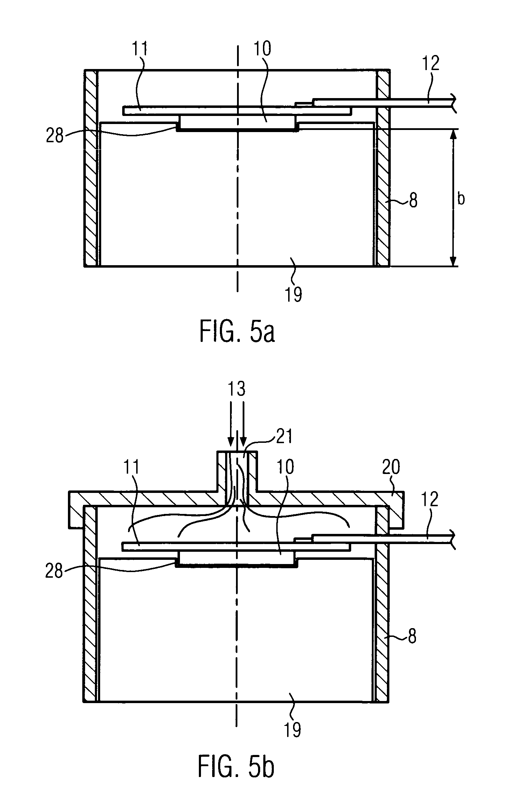

Anhand der Fig. 5a und 5b wird nun ein Verfahren zum Herstellen der Kunststoffscheibe 7 mit der darin eingebetteten Leiterplatte 11 mit dem Sensor 10 und der Sensorelektronik des Drehwinkelgebers beschrieben

Zunächst wird die Leiterplatte 11 mit dem darauf angebrachten Sensor 10 in eine Spritzgießform eingebracht. Die Leiterplatte 11 mit dem darauf angebrachten Sensor 10 wird so in der Spritzgießform positioniert, dass die Position des Sensors 10 in der Kunststoffscheibe 7 in Bezug auf die Außenmaße der Kunststoffscheibe 7 festgelegt wird.

Um das Positionieren der Leiterplatte 11 in der Spritzgießform zu erleichtern kann vorgesehen sein, dass in der Spritzgießform Stifte vorgesehen sind, und die Leiterplatte Bohrungen aufweist, in die die Stifte eingreifen und so die Position der Leiterplatte in der Spritzgießform und dadurch die Position des Sensors in der Kunststoffscheibe festlegen.

Wie in den Figuren 5a und 5b gezeigt, kann alternativ vorgesehen sein, dass die Spritzgießform einen Stempel 19 umfasst, der eine Aufnahme bzw. eine Kavität 28 für das Gehäuse des Sensors 10 aufweist. In diesem Fall wird der Sensor 10, und damit die Leiterplatte 11 über die Kavität 28 in dem Stempel 19 in der Spritzgießform ausgerichtet. Die radiale Position der Kavität 28 im Stempel 19 entspricht der radialen Position der Maßverkörperung 6 an dem Elektromotor 2, so dass die Positionen des Sensors 10 und der Maßverkörperung 6 aneinander angepasst werden.

Eine weitere Möglichkeit zur Positionierung der Leiterplatte in der Spritzgießform kann dadurch geschaffen werden, dass die Leiterplatte mit einem Leadframe versehen ist, der in der Spritzgießform fixiert wird und somit den Sensor in der Spritzgießform positioniert.

Noch eine weitere Möglichkeit besteht darin, dass ein Teil der Kunststoffscheibe vorgespritzt wird, die Leiterplatte mit dem Sensor auf das vorgespritzte Element der Kunststoffscheibe aufgelegt und anschließend komplett mit Kunststoff umkapselt werden.

Die Spritzgießform umfasst eine Außenwand, durch die die Außenkontur der Kunststoffscheibe 7 festgelegt wird. Wird das sensorseitige Befestigungselement 8 durch eine separate Hülse ausgebildet, so kann vorgesehen werden, dass die Außenwand der Spritzgießform durch diese Hülse ausgebildet wird. Das Kunststoffmaterial wird in diesem Fall also in die Hülse eingespritzt, so dass die Kunststoffscheibe 7 in der Hülse ausgebildet wird und sich dadurch direkt mit der Hülse verbindet. Die Hülse hat dann die Form eines Topfes, wobei die Kunststoffscheibe 7 den Boden des Topfes bildet. Die Leiterplatte 11 mit dem Sensor 10 wird nach einer der oben beschriebenen Möglichkeiten in der Spritzgießform ausgerichtet, so dass die Leiterplatte 11 mit dem darauf angeordneten Sensor 10 in der Kunststoffscheibe 7 eine vorbestimmte Position einnimmt. Die Position des Sensors 10 ist daher maßhaltig gegenüber der Außenkontur der Kunststoffscheibe 7.

Ist die Leiterplatte 11 mit dem Sensor 10 nach einer der oben beschriebenen Möglichkeiten positioniert, so wird ein Deckel 20 der Spritzgießvorrichtung auf die Hülse oder die Umrandung der Spritzgießform aufgesetzt. Dieser Deckel 20 weist eine Öffnung 21 auf über die das flüssige Kunststoffmaterial 13 in die Spritzgießform eingefüllt wird. Der Spritz- bzw. Umgießprozess ist so ausgelegt, dass die Sensorelektronik, der Sensor 10 und die Leiterplatte 11 mit dem darauf befestigten Kabel 12 nicht beschädigt werden. Vorzugsweise werden Niederdruckprozesse mit Duroplasten, Thermoplastspritzguß, Zweikomponentengießharze oder teilpolymerisierte Einkomponentenharze eingesetzt. Um den Schutz gegen elektrische und magnetische Störfelder zu erreichen, kann der Kunststoff 13 mit elektrisch leitfähigen Füllstoffen versehen sein. Es ist auch möglich, Einlegeteile mit abschirmender Wirkung in die Kunststoffscheibe einzubringen oder die Kunststoffscheibe zumindest teilweise mit einer elektrisch hochleitfähigen Lackschicht zu überziehen.

Da die Außenkontur der Kunststoffscheibe 7 in Bezug auf die Schnittstelle mit dem Elektromotor 2 standardisiert ist, und der Sensor 10 in Bezug auf die Außenkontur der Kunststoffscheibe 7 ausgerichtet ist, wird hierdurch die gewünschte radiale Ausrichtung des Sensor 10 erreicht, so dass ein optimales Zusammenspiel zwischen der Maßverkörperung 6, die auf der Motorwelle 5 des Elektromotors 2 angeordnet ist und dem Sensor 10 erzielt wird.

Beim Verspritzen können zudem Programmierpins an der Leiterplatte 11 freigestellt werden, die nach dem Programmieren zugegossen oder mit einem warmen Stempel zusammengedrückt werden.

Beim Zusammenbau des Bausatzes 1 muss die Kunststoffscheibe mit dem sensorseitigen Befestigungselement an dem motorseitigen Befestigungselement befestigt werden. Da die beiden Befestigungselemente komplementär zueinander ausgebildet sind und vorzugsweise eines der Befestigungselemente als Welle und das andere Befestigungselement als Bohrung ausgebildet ist, müssen die beiden Befestigungselemente zur Befestigung der Kunststoffscheibe am Elektromotor lediglich ineinander gesteckt werden.

Wie beschrieben, ist die Position des Sensors 10 in Bezug auf die Außenmaße der Kunststoffscheibe 7 und damit in Bezug auf das sensorseitige Befestigungselement im Spritzgießverfahren festgelegt worden. Dadurch wird die radiale Position des Sensors 10 in Bezug auf die radiale Position der Maßverkörperung 6, die auf der Motorwelle 5 angeordnet ist, vorgegeben. Das sensorseitige Befestigungselement und das motorseitige Befestigungselement können so ausgebildet sein, dass durch sie auch der axiale Abstand zwischen dem Sensor 10 und der Maßverkörperung 6 festgelegt wird. Dies ist vor allem dann der Fall, wenn das sensorseitige Befestigungselement fest mit der Kunststoffscheibe 7 verbunden ist.

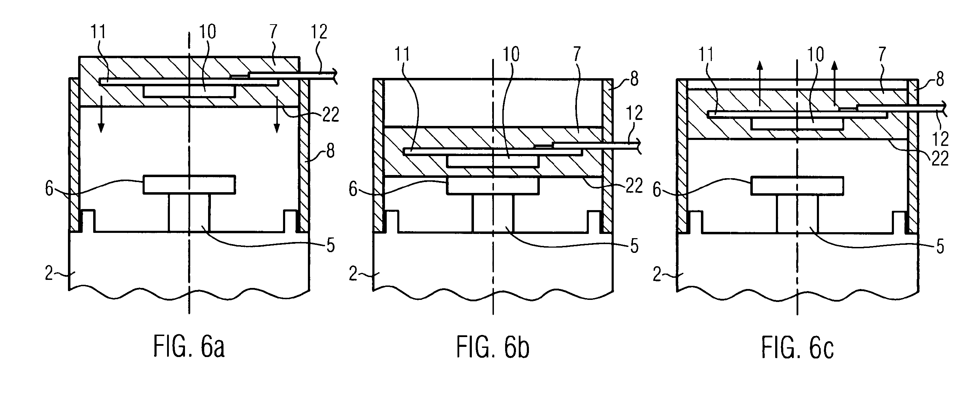

Ist das sensorseitige Befestigungselement als separate Hülse ausgebildet oder wird das sensorseitige Befestigungselement durch die Mantelfläche der Kunststoffscheibe 7 ausgebildet, so muss der axiale Abstand zwischen dem Sensor 10 und der Maßverkörperung 6 eingestellt werden. Dies ist in den Fig. 6a bis 6c gezeigt. Die Kunststoffscheibe 7 wird in die Hülse 8 eingeschoben (Fig. 6a) und soweit in die Hülse 8 eingeführt, bis die Unterseite 22 der Kunststoffscheibe 7 auf der Maßverkörperung 6 aufliegt (Fig. 6b). Danach wird die Kunststoffscheibe auf Maß wieder herausgezogen, so dass der optimale Abstand zwischen der Unterseite 22 der Kunststoffscheibe 7 und der Maßverkörperung 6 und somit der optimale Abstand zwischen dem Sensor 10 und der Maßverkörperung 6 eingestellt ist (Fig. 6c).

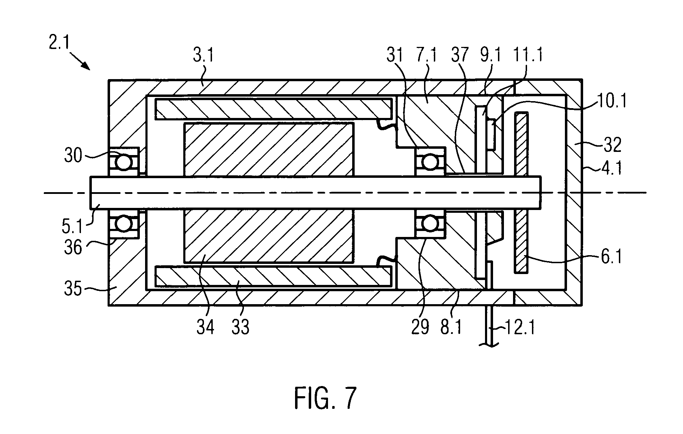

In Fig. 7 ist noch eine weitere Ausführungsform eines Elektromotors 2.1 gezeigt. Für diese Ausführungsform wird gesondert Schutz beansprucht. Der Elektromotor 2.1 umfasst ein Gehäuse 3.1, in dem ein Stator 33 und ein auf einer Motorwelle 5.1 angeordneter Rotor 34 angeordnet sind. In einer vorderseitigen Stirnwand 35 des Gehäuses 3.1 ist ein erster Lagersitz 36 für die Motorwelle 5.1 ausgebildet. Im Bereich der rückwärtigen Stirnwand 4.1 des Elektromotors 2.1 ist eine Einschiebeöffnung für die Kunststoffscheibe 7.1 mit dem darin eingebetteten Sensor 10.1 vorgesehen. Die Kunststoffscheibe 7.1 ist im Wesentlichen so ausgebildet, wie in den vorstehenden Ausführungsbeispielen beschrieben. Im Folgenden werden lediglich die Unterschiede aufgeführt.

Die Kunststoffscheibe 7.1 ist im Wesentlichen zylindrisch, wobei die Mantelfläche der Kunststoffscheibe 7.1 das sensorseitige Befestigungselement 8.1 ausbildet. Die Kunststoffscheibe 7.1 wird durch die Einschiebeöffnung in das Gehäuse 3.1 des Elektromotors 2.1 eingeführt. Die Innenwand des Gehäuses 3.1 bildet dabei das motorseitige Befestigungselement 9.1 aus. Um eine feste Verbindung zu erreichen, kann vorgesehen werden, dass die Kunststoffscheibe 7.1 mit dem Motorgehäuse 3.1 verklebt, verschweißt oder verstemmt wird. In die Kunststoffscheibe 7.1 sind eine Leiterplatte 11.1 mit dem darauf angeordneten Sensor 10.1 eingebettet. Über das Anschlusskabel 12.1 ist die Leiterplatte 11.1 mit einer Stromversorgung verbunden. Es können an der Kunststoffscheibe 7.1 Kontakte für die elektronische Kommutierung des Stators vorgesehen sein. Die Kunststoffscheibe 7.1 weist ferner eine mittige Bohrung 37 auf, durch die Motorwelle 5.1 durchgeführt wird. Ein Bereich der Bohrung 37 in der Kunststoffscheibe 7.1 ist so ausgebildet, dass er einen zweiten Lagersitz 29 für die Motorwelle 5.1 ausbildet. Als Lager 30, 31 dienen bevorzugt Kugellager, die in den ersten Lagersitz 36 in dem Gehäuse 3.1 des Elektromotors 2.1 und in den zweiten Lagersitz 29 der Kunststoffscheibe 7.1 eingesetzt werden. Am rückwärtigen Ende der Motorwelle 5.1 ist die Maßverkörperung 6.1 angebracht, die ebenfalls durch die Einschiebeöffnung des Motorgehäuses 3.1 auf die Motorwelle 5.1 aufgeschoben werden kann. Die Kunststoffscheibe 7.1 ist also zwischen dem Rotor 34 und der Maßverkörperung 6.1 auf der Motorwelle angeordnet. Die Einschiebeöffnung wird durch eine Abdeckkappe 32 abgedeckt.

Als Drehwinkelgeber können verschiedenste Varianten eingesetzt werden. Beispielsweise können kapazitive Drehwinkelgeber, induktive Drehwinkelgeber, magnetoresistive Drehwinkelgeber, optische Drehwinkelgeber oder potentiometrische Drehwinkelgeber eingesetzt werden. Durch die standardisierte mechanische Schnittstelle zwischen der Kunststoffscheibe und dem Elektromotor fällt die Notwendigkeit weg, für jeden neuen Drehwinkelgebertypus oder für jeden neuen Elektromotortypus ein geändertes Drehwinkelgebergehäuse konstruieren zu müssen. Eventuelle geänderte Kabelvarianten an dem Drehwinkelgeber können durch verschiedene Spritzgießeinsätze abgefangen werden, es muss kein neues Gehäuse konstruiert werden.

## Patentansprüche

1. Bausatz (1; 1.1) für einen Elektromotor (2; 2.1) mit einem Drehwinkelgeber zur Positionsbestimmung einer Motorwelle (5; 5.1) des Elektromotors (2; 2.1), umfassend einen Elektromotor (2; 2.1) sowie einen Drehwinkelgeber mit einer Maßverkörperung (6; 6.1) und mit einem Sensor (10; 10.1) mit Sensorelektronik, wobei die Maßverkörperung (6; 6.1) des Drehwinkelgebers auf der an einer rückwärtigen Stirnseite (4; 4.1) des Elektromotors (2; 2.1) aus diesem austretenden Motorwelle (5; 5.1) anbringbar ist, der Sensor (10; 10.1) und die zugehörige Sensorelektronik des Drehwinkelgebers zumindest teilweise von Kunststoff umspritzt sind, so dass eine Kunststoffscheibe (7; 7'; 7"; 7"'; 7""; 7.1) ausgebildet ist, an der rückwärtigen Stirnseite (4; 4.1) des Elektromotors (2; 2.1) ein motorseitiges Befestigungselement (9; 9'; 9"; 9"'; 9.1) angeordnet ist und die Kunststoffscheibe (7; 7'; 7"; 7"'; 7"") ein sensorseitiges Befestigungselement (8; 8'; 8"; 8"'; 8.1) aufweist, welches komplementär zu dem motorseitigen Befestigungselement (9; 9'; 9"; 9"'; 9.1) ausgebildet ist.

2. Bausatz (1; 1.1) nach Anspruch 1, **dadurch gekennzeichnet, dass** eines der beiden Befestigungselemente (8; 8"'; 9'; 9"; 9.1) hülsenförmig ausgebildet ist und das andere Befestigungselement (9; 9"'; 8'; 8"; 8.1) komplementär dazu ausgebildet ist, so dass die Befestigungselemente (8, 9; 8', 9'; 8", 9"; 8"', 9"'; 8.1, 9.1) ineinander steckbar sind.

3. Bausatz (1; 1.1) nach Anspruch 2, **dadurch gekennzeichnet, dass** das hülsenförmige Befestigungselement (8; 8"'; 9'; 9"; 9.1) eine zylindrische Aufnahme für das andere Befestigungselement (9; 9"'; 8'; 8"; 8.1) ausbildet, welches als zylindrische Welle ausgebildet ist.

4. Bausatz (1) nach einem der Ansprüche 1 bis 3, **dadurch gekennzeichnet, dass** das motorseitige Befestigungselement (9, 9', 9", 9''') als zylindrische Bohrung oder als zylindrische Welle am Motorgehäuse ausgebildet ist und die Kunststoffscheibe (7, 7', 7") mit dem darin eingebetteten Sensor (10) zylindrisch ist und zumindest teilweise als sensorseitiges Befestigungselement (8"; 8"') mit einer zylindrischen Welle bzw. mit einer zylindrischen Bohrung ausgebildet ist.

5. Bausatz (1) nach einem der Ansprüche 1 bis 3, **dadurch gekennzeichnet, dass** das sensorseitige Befestigungselement (8, 8') als eine an der Kunststoffscheibe (7) angebrachte Hülse ausgebildet ist.

6. Bausatz (1) nach einem der Ansprüche 1 bis 5, **dadurch gekennzeichnet, dass** die Kunststoffscheibe (7, 7', 7") mit einem Schutz gegen elektromagnetische Störfelder versehen ist.

7. Bausatz (1) nach Anspruch 6, **dadurch gekennzeichnet, dass** der Schutz gegen elektromagnetische Störfelder durch eine auf der Kunststoffscheibe (7) angebrachte, elektrisch hochleitfähige Lackschicht (14) und/oder in die Kunststoffscheibe (7") eingebrachte elektrisch leitfähige Füllstoffe (17) und/oder an der Kunststoffscheibe (7') angebrachte Einlegeteile (16) mit abschirmender Wirkung ausgebildet ist.

8. Bausatz (1) nach einem der Ansprüche 5 bis 7, **dadurch gekennzeichnet, dass** die Kunststoffscheibe (7) mit dem darin eingebetteten Sensor (10) und der Sensorelektronik in der Hülse (8) verschiebbar ist, um einen optimalen Abstand zwischen der Maßverkörperung (6) und dem Sensor (10) einzustellen.

9. Bausatz (1; 1.1) nach einem der Ansprüche 1 bis 8, **dadurch gekennzeichnet, dass** die Sensorelektronik mit einem Kabel (12; 12.1) verbunden ist und in der Kunststoffscheibe (7; 7'; 7"; 7"'; 7""; 7.1) eine Zugentlastung für das Kabel vorgesehen ist.

10. Bausatz (1; 1.1) nach einem der Ansprüche 1 bis 9, **dadurch gekennzeichnet, dass** der Sensor (10; 10.1) mit zugehöriger Sensorelektronik auf einer Leiterplatte (11; 11.1) angeordnet ist und die Leiterplatte (11; 11.1) elektrische Anschlüsse (25', 26) für den Elektromotor (2; 2.1) aufweist.

11. Bausatz (1) nach Anspruch 10, **dadurch gekennzeichnet, dass** an der Leiterplatte (11) oder an der Motorwicklung elektrische Kontaktelemente (25, 25') angeordnet sind, die die elektrischen Anschlüsse für den Elektromotor (2) ausbilden.

12. Bausatz (1.1) nach einem der Ansprüche 1 bis 11, **dadurch gekennzeichnet, dass** die Kunststoffscheibe (7.1) im Bereich der rückwärtigen Stirnseite (4.1) in das Gehäuse (3.1) des Elektromotors (2.1) eingesteckt ist, wobei das Gehäuse (3.1) das motorseitige Befestigungselement (9.1) und die Kunststoffscheibe (7.1) das sensorseitige Befestigungselement (8.1) ausbildet.

13. Bausatz (1.1) nach Anspruch 12, **dadurch gekennzeichnet, dass** die Kunststoffscheibe (7.1) einen Lagersitz (29) für die Motorwelle (5.1) des Elektromotors (2.1) ausbildet.

14. Bausatz (1.1) nach einem der Ansprüche 12 oder 13, **dadurch gekennzeichnet, dass** die Kunststoffscheibe (7.1) mit dem darin eingebetteten Sensor (10.1) und der zugehörigen Sensorelektronik zwischen dem Rotor (30) und der Maßverkörperung (6.1) auf der Motorwelle (5.1) angeordnet ist.

15. Elektromotor (2.1) aus einem Bausatz nach einem der Ansprüche 12 bis 14, umfassend einen Drehwinkelgeber mit einem in eine Kunststoffscheibe (7.1) eingebetteten Sensor (10.1) mit zugehöriger Sensorelektronik und mit einer Maßverkörperung (6.1), wobei die Kunststoffscheibe (7.1) in ein Gehäuse (3.1) des Elektromotors (2.1) eingesteckt ist und einen Lagersitz (29) für eine Motorwelle (5.1) des Elektromotors (2.1) ausbildet.

16. Verfahren zur Herstellung einer Kunststoffscheibe (7; 7'; 7"; 7"'; 7""; 7.1) mit einem darin eingebetteten, auf einer Leiterplatte (11; 11.1) angeordneten Sensor (10; 10.1) eines Drehwinkelgebers mit zugehöriger Sensorelektronik für einen Elektromotorbausatz (1; 1.1) nach einem der vorangehenden Ansprüche mittels Spritzgießen, umfassend die folgenden Schritte:
Einbringen der Leiterplatte (11; 11.1) mit dem Sensor (10, 10.1) und mit der Sensorelektronik in eine Spritzgießform und
Umspritzen der Leiterplatte (11; 11.1) und des Sensors (10; 10.1) mit Kunststoff (13), wobei die Leiterplatte (11; 11.1) mit dem daran angebrachten Sensor (10; 10.1) so in der Spritzgießform positioniert wird, dass die Position des Sensors (10; 10.1) in der Kunststoffscheibe (7; 7'; 7"; 7"'; 7""; 7.1) in Bezug auf die Außenmaße der Kunststoffscheibe (7; 7'; 7"; 7'''; 7""; 7.1) festgelegt wird.

17. Verfahren nach Anspruch 16, **dadurch gekennzeichnet, dass** in der Spritzgießform Stifte vorgesehen sind, die in Bohrungen in der Leiterplatte (11; 11.1) eingreifen und so die Position des Sensors (10; 10.1) in der Kunststoffscheibe (7; 7'; 7": 7"'; 7""; 7.1) festlegen.

18. Verfahren nach Anspruch 16, **dadurch gekennzeichnet, dass** in der Spritzgießform eine Kavität (28) vorgesehen ist, in die der Sensor (10; 10.1) eingelegt und somit positioniert wird.

19. Verfahren nach Anspruch 16, **dadurch gekennzeichnet, dass** die Leiterplatte (11; 11.1) über einen Leadframe in der Spritzgießform fixiert und somit der Sensor (10; 10.1) positioniert wird.

20. Verfahren nach Anspruch 16, **dadurch gekennzeichnet, dass** die Leiterplatte (11; 11.1) mit dem Sensor (10; 10.1) auf ein vorgespritztes Element der Kunststoffscheibe (7; 7'; 7"; 7"'; 7""; 7.1) aufgelegt und komplett umkapselt wird.

## Claims

1. Kit (1; 1.1) for an electric motor (2; 2.1) having a rotary encoder for determining the position of a motor shaft (5; 5.1) of the electric motor (2; 2.1), comprising an electric motor (2; 2.1) and a rotary encoder having a solid measure (6; 6.1) and having a sensor (10; 10.1) with a sensor electronics, wherein the solid measure (6; 6.1) of the rotary encoder can be mounted on the motor shaft (5; 5.1) emerging from the electric motor (2; 2.1) at a rear end face (4; 4.1) of the electric motor (2; 2.1), the sensor (10; 10.1) and the associated sensor electronics of the rotary encoder are at least partially coated with a plastic material so as to form a plastic disc (7; 7'; 7"; 7"'; 7""; 7.1), a motor-side fixing member (9; 9'; 9"; 9'''; 9.1) is disposed at the rear end face (4; 4.1) of the electric motor (2; 2.1), and the plastic disc (7; 7'; 7"; 7'''; 7"") comprises a sensor-side fixing member (8; 8'; 8"; 8"'; 8.1) designed to be complementary with the motor-side fixing member (9; 9'; 9"; 9"'; 9.1).

2. Kit (1; 1.1) according to claim 1, **characterized in that** one of the two fixing members (8; 8"'; 9'; 9"; 9.1) is sleeve-shaped and that the other fixing member (9; 9"'; 8'; 8"; 8.1) has a complementary shape, so that the fixing members (8, 9; 8', 9'; 8", 9"; 8"', 9"'; 8.1, 9.1) can be inserted into each other.

3. Kit (1; 1.1) according to claim 2, **characterized in that** the sleeve-shaped fixing member (8; 8"'; 9'; 9"; 9.1) forms a cylindrical receptacle for the other fixing member (9; 9"'; 8'; 8"; 8.1) which is formed as a cylindrical shaft.

4. Kit (1) according to one of claims 1 to 3, **characterized in that** the motor-side fixing member (9, 9', 9", 9"') is formed as a cylindrical bore or as a cylindrical shaft on the motor casing and that the plastic disc (7; 7'; 7") with the sensor (10) embedded therein is cylindrical and at least partially formed as a sensor-side fixing member (8"; 8"') with a cylindrical shaft or with a cylindrical bore.

5. Kit (1) according to one of claims 1 to 3, **characterized in that** the sensor-side fixing member (8, 8') is formed as a sleeve mounted on the plastic disc (7).

6. Kit (1) according to one of claims 1 to 5, **characterized in that** the plastic disc (7, 7', 7") is provided with a protection against electromagnetic interference fields.

7. Kit (1) according to claim 6, **characterized in that** the protection against electromagnetic interference fields is realized by an electrically highly conductive lacquer coat (14) applied to the plastic disc (7) and/or electrically conductive fillers (17) incorporated in the plastic disc (7") and/or insert parts (16) having a shielding effect mounted on the plastic disc (7').

8. Kit (1) according to one of claims 5 to 7, **characterized in that** the plastic disc (7) with the sensor (10) and the sensor electronics embedded therein is displaceable in the sleeve (8) in order to adjust an optimum distance between the solid measure (6) and the sensor (10).

9. Kit (1; 1.1) according to one of claims 1 to 8, **characterized in that** the sensor electronics is connected to a cable (12; 12.1) and that a strain relief for the cable is provided in the plastic disc (7; 7'; 7"; 7'''; 7""; 7.1).

10. Kit (1; 1.1) according to one of claims 1 to 9, **characterized in that** the sensor (10; 10.1) and the associated sensor electronics is mounted on a printed circuit board (11; 11.1) and that the printed circuit board (11; 11.1) comprises electrical connectors (25', 26) for the electric motor (2; 2.1).

11. Kit (1) according to claim 10, **characterized in that** electrical contact elements (25, 25') are disposed on the printed circuit board (11) or on the motor winding, which form the electrical connectors for the electric motor (2).

12. Kit (1.1) according to one of claims 1 to 11, **characterized in that** the plastic disc (7.1) is inserted into the casing (3.1) of the electric motor (2.1) in the area of the rear end face (4.1), wherein the casing (3.1) forms the motor-side fixing member (9.1) and the plastic disc (7.1) forms the sensor-side fixing member (8.1).

13. Kit (1.1) according to claim 12, **characterized in that** the plastic disc (7.1) forms a bearing seat (29) for the motor shaft (5.1) of the electric motor (2.1).

14. Kit (1.1) according to one of claims 12 or 13, **characterized in that** the plastic disc (7.1) with the sensor (10.1) embedded therein and the associated sensor electronics is disposed between the rotor (30) and the solid measure (6.1) on the motor shaft (5.1).

15. Electric motor (2.1) formed of a kit according to one of claims 12 to 14, comprising a rotary encoder having a sensor (10.1) with an associated sensor electronics embedded in a plastic disc (7.1) and having a solid measure (6.1), wherein the plastic disc (7.1) is inserted into a casing (3.1) of the electric motor (2.1) and forms a bearing seat (29) for a motor shaft (5.1) of the electric motor (2.1).

16. Method for producing a plastic disc (7; 7'; 7"; 7"'; 7""; 7.1) with a sensor (10; 10.1) including an associated sensor electronics of a rotary encoder embedded therein and disposed on a printed circuit board (11; 11.1) for an electric motor kit (1; 1.1) according to one of the preceding claims by means of injection molding, comprising the following steps:
introducing the printed circuit board (11; 11.1) with the sensor (10; 10.1) and the sensor electronics into an injection mold and
coating the printed circuit board (11; 11.1) and the sensor (10; 10.1) with a plastic material (13), wherein the printed circuit board (11; 11.1) with the sensor (10; 10.1) mounted thereon is positioned in the injection mold such that the position of the sensor (10; 10.1) in the plastic disc (7; 7'; 7"; 7"'; 7""; 7.1) is defined with respect to the outer dimensions of the plastic disc (7; 7'; 7"; 7"'; 7""; 7.1).

17. Method according to claim 16, **characterized in that** pins are provided in the injection mold which engage in bores in the printed circuit board (11; 11.1), thereby defining the position of the sensor (10; 10.1) in the plastic disc (7; 7'; 7"; 7"'; 7""; 7.1).

18. Method according to claim 16, **characterized in that** a cavity (28) is provided in the injection mold, into which the sensor (10; 10.1) is placed and thus positioned.

19. Method according to claim 16, **characterized in that** the printed circuit board (11; 11.1) is fixed in the injection mold by a lead frame, thereby positioning the sensor (10; 10.1).

20. Method according to claim 16, **characterized in that** the printed circuit board (11; 11.1) with the sensor (10; 10.1) is placed onto a pre-coated element of the plastic disc (7; 7'; 7"; 7"'; 7""; 7.1) and is completely encapsulated.

## Revendications

1. Kit de construction (1; 1.1) pour un moteur électrique (2; 2.1) avec un capteur d'angle de rotation pour la détermination de position d'un arbre de moteur (5; 5.1) du moteur électrique (2; 2.1), comprenant un moteur électrique (2; 2.1) ainsi qu'un capteur d'angle de rotation avec un instrument dit mesure matérialisée (6; 6.1) et un détecteur (10; 10.1) qui comporte une électronique de détecteur, kit de construction dans lequel
la mesure matérialisée (6; 6.1) du capteur d'angle de rotation peut être rapportée sur l'arbre de moteur (5; 5.1) sortant du moteur électrique (2; 2.1) sur un côté frontal arrière (4; 4.1) de celui-ci,
le détecteur (10; 10.1) et l'électronique de détecteur associée du capteur d'angle de rotation sont entourés au moins partiellement de matière plastique par moulage par injection, de façon à ce que soit formé un disque de matière plastique (7 ; 7'; 7''; 7'''; 7''''; 7.1),
sur le côté frontal arrière (4; 4.1) du moteur électrique (2; 2.1) est agencé un élément de fixation côté moteur (9; 9'; 9''; 9'''; 9.1) et le disque de matière plastique (7 ; 7'; 7"; 7'''; 7'''') présente un élément de fixation côté détecteur (8; 8'; 8''; 8'''; 8.1), qui est d'une configuration complémentaire à l'élément de fixation côté moteur (9; 9'; 9''; 9'''; 9.1).

2. Kit de construction (1; 1.1) selon la revendication 1, **caractérisé en ce que** l'un des deux éléments de fixation (8; 8'''; 9'; 9"'; 9.1) est d'une configuration en forme de douille, et l'autre élément de fixation (9; 9'''; 8' ; 8"'; 8.1) est de configuration complémentaire au précédent, de sorte que les éléments de fixation (8, 9; 8', 9'; 8'', 9''; 8''', 9'''; 8.1, 9.1) peuvent être emmanchés mutuellement l'un dans l'autre.

3. Kit de construction (1; 1.1) selon la revendication 2, **caractérisé en ce que** l'élément de fixation en forme de douille (8; 8'''; 9'; 9"'; 9.1) réalise un logement de réception pour l'autre élément de fixation (9; 9'''; 8'; 8"'; 8.1), qui est réalisé sous forme d'arbre cylindrique.

4. Kit de construction (1) selon l'une des revendications 1 à 3, **caractérisé en ce que** l'élément de fixation côté moteur (9, 9', 9'', 9''') est réalisé sous forme d'alésage cylindrique ou d'arbre cylindrique sur le carter de moteur, et le disque de matière plastique (7, 7', 7'') avec le détecteur (10), qui y est noyé, est cylindrique et est réalisé au moins partiellement en tant qu'élément de fixation côté détecteur (8''; 8''') avec un arbre cylindrique respectivement un alésage cylindrique.

5. Kit de construction (1) selon l'une des revendications 1 à 3, **caractérisé en ce que** l'élément de fixation côté détecteur (8; 8') est réalisé en tant que douille placée sur le disque de matière plastique (7).

6. Kit de construction (1) selon l'une des revendications 1 à 3, **caractérisé en ce que** le disque de matière plastique (7, 7', 7'') est doté d'une protection à l'encontre des champs électromagnétiques parasites.

7. Kit de construction (1) selon la revendication 6, **caractérisé en ce que** la protection à l'encontre de champs électromagnétiques parasites est réalisée par une couche de vernis ou peinture (14) hautement conductrice sur le plan électrique, qui est rapportée sur le disque de matière plastique (7), et/ou par des charges (17) électriquement conductrices ayant été introduites dans le disque de matière plastique (7''), et/ou par des pièces d'insert (16) placées sur le disque de matière plastique (7') et produisant un effet de blindage.

8. Kit de construction (1) selon l'une des revendications 5 à 7, **caractérisé en ce que** le disque de matière plastique (7), avec le détecteur (10) et l'électronique de détecteur, qui y sont noyés, peut coulisser dans la douille (8) en vue de régler une distance optimale entre la mesure matérialisée (6) et le détecteur (10).

9. Kit de construction (1; 1.1) selon l'une des revendications 1 à 8, **caractérisé en ce que** l'électronique de détecteur est reliée à un câble (12; 12.1), et dans le disque de matière plastique (7, 7', 7''; 7'''; 7''''; 7.1) il est prévu un système de décharge en traction pour le câble.

10. Kit de construction (1; 1.1) selon l'une des revendications 1 à 9, **caractérisé en ce que** le détecteur (10; 10.1), avec l'électronique de détecteur associée, est agencé sur une plaque de circuit imprimé (11; 11.1), et la plaque de circuit imprimé (11; 11.1) présente des bornes de raccordement électriques (25', 26) pour le moteur électrique (2; 2.1).

11. Kit de construction (1) selon la revendication 10, **caractérisé en ce que** sur la plaque de circuit imprimé (11) ou sur l'enroulement de moteur, sont agencés des éléments de contact électriques (25, 25'), qui forment les bornes de raccordement électriques pour le moteur électrique (2).

12. Kit de construction (1.1) selon l'une des revendications 1 à 11, **caractérisé en ce que** le disque de matière plastique (7.1) est emmanché dans le carter (3.1) du moteur électrique (2.1), au niveau du côté frontal arrière (4.1), le carter (3.1) formant l'élément de fixation côté moteur (9.1) et le disque de matière plastique (7.1) formant l'élément de fixation côté détecteur (8.1).

13. Kit de construction (1.1) selon la revendication 12, **caractérisé en ce que** le disque de matière plastique (7.1) forme une portée de palier (29) pour l'arbre de moteur (5.1) du moteur électrique (2.1).

14. Kit de construction (1.1) selon l'une des revendications 12 ou 13, **caractérisé en ce que** le disque de matière plastique (7.1), avec le détecteur (10.1) qui y est noyé et l'électronique de détecteur associée, est agencé sur l'arbre de moteur (5.1), entre le rotor (30) et la mesure matérialisée (6.1).

15. Moteur électrique (2.1) réalisé à partir d'un kit de construction selon l'une des revendications 12 à 14, comprenant un capteur d'angle de rotation avec un détecteur (10.1) à électronique de détecteur associée, qui est noyé dans un disque de matière plastique (7.1), et avec une mesure matérialisée (6.1), moteur dans lequel le disque de matière plastique (7.1) est emmanché dans un carter (3.1) du moteur électrique (2.1) et forme une portée de palier (29) pour un arbre de moteur (5.1) du moteur électrique (2.1).

16. Procédé de fabrication, par moulage par injection, d' un disque de matière plastique (7, 7', 7''; 7"'; 7""; 7.1) dans lequel est noyé un détecteur (10; 10.1) d'un capteur d'angle de rotation avec l'électronique de détecteur associée, qui est agencé sur une plaque de circuit imprimé (11; 11.1) et qui est destiné à un kit de construction de moteur électrique (1; 1.1) selon l'une des revendications précédentes, le procédé comprenant les étapes suivantes :
introduction de la plaque de circuit imprimé (11; 11.1) avec le détecteur (10; 10.1) et avec l'électronique de détecteur, dans un moule de moulage par injection, et
injection de matière plastique (13) autour de la plaque de circuit imprimé (11; 11.1) et du détecteur (10; 10.1), la plaque de circuit imprimé (11; 11.1) avec le détecteur (10; 10.1) qui y est rapporté, étant positionnée dans le moule de moulage par injection de manière à ce que la position du détecteur (10; 10.1) dans le disque de matière plastique (7, 7', 7''; 7'''; 7''''; 7.1) soit fixée par rapport aux dimensions extérieures du disque de matière plastique (7, 7', 7''; 7'''; 7''''; 7.1).

17. Procédé selon la revendication 16, **caractérisé en ce que** dans le moule de moulage par injection sont prévues des broches, qui viennent s'engager dans des perçages de la plaque de circuit imprimé (11; 11.1), en fixant ainsi la position du détecteur (10; 10.1) dans le disque de matière plastique (7, 7', 7''; 7"'; 7''''; 7.1).

18. Procédé selon la revendication 16, **caractérisé en ce que** dans le moule de moulage par injection est prévue une cavité (28) dans laquelle on place le détecteur (10; 10.1) qui est ainsi positionné.

19. Procédé selon la revendication 16, **caractérisé en ce que** la plaque de circuit imprimé (11; 11.1) est fixée dans le moule de moulage par injection par l'intermédiaire d'un cadre ou d'une grille de connexion (leadframe), en produisant ainsi le positionnement du détecteur (10; 10.1).

20. Procédé selon la revendication 16, **caractérisé en ce que** la plaque de circuit imprimé (11; 11.1), avec le détecteur (10; 10.1), est placée sur un élément pré-moulé par injection du disque de matière plastique (7, 7', 7"; 7"'; 7''''; 7.1), et est alors encapsulée en totalité.
